# EUROPÄISCHE PATENTSCHRIFT

(11) **EP 2 934 984 B1**
(45) Veröffentlichungstag und Bekanntmachung des Hinweises auf die Patenterteilung: **09.11.2016**
(21) Anmeldenummer: 13771385.5
(22) Anmeldetag: 25.09.2013
(51) Int. Cl.: B62D 1/184, F16B 17/00

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 21.12.2012 DE 102012112890
(43) Veröffentlichungstag der Anmeldung: 28.10.2015
(73) Patentinhaber: ThyssenKrupp Presta Aktiengesellschaft, 9492 Eschen (LI); ThyssenKrupp AG, 45143 Essen (DE)
(72) Erfinder: HAHN, Michael, CH-9434 Au (SG) (CH); FLEISCHER, Martin, CH-9436 Balgach (CH); SCHWARZHANS, Paul, A-6800 Feldkirch (AT)
(74) Vertreter: ThyssenKrupp Intellectual Property GmbH
(86) Internationale Anmeldenummer: PCT/EP2013/002868
(87) Internationale Veröffentlichungsnummer: WO 2014/094926

(56) Entgegenhaltungen:
- WO-A1-2011/100770
- DE-C- 425 879

## Beschreibung

Die Erfindung bezieht sich auf eine Lenksäule für ein Kraftfahrzeug mit einer Spannvorrichtung, in deren geöffnetem Zustand die Position der Lenksäule verstellbar und in deren geschlossenem Zustand die Position der Lenksäule festgestellt ist und die einen Spannbolzen umfasst, welcher eine Längsachse, erste und zweite, den Spannbolzen in axialer Richtung begrenzende Enden und eine den Spannbolzen in radialer Richtung begrenzende Außenwand besitzt, wobei der Spannbolzen zum Öffnen und Schließen der Spannvorrichtung mittels eines Betätigungshebels, den der Spannbolzen durch eine Öffnung durchsetzt, um seine Längsachse verdrehbar ist und wobei der Spannbolzen einen an sein erstes Ende anschließenden Endabschnitt und einen an den Endabschnitt in Richtung zum zweiten Ende des Spannbolzens anschließenden Verbindungsabschnitt aufweist, der im Bereich der Öffnung des Betätigungshebels liegt und in dessen axialer Erstreckung der Spannbolzen durch einen Presssitz mit dem Betätigungshebel verbunden ist. Weiters bezieht sich die Erfindung auf ein Verfahren zur Herstellung einer Lenksäule für ein Kraftfahrzeug mit einer Spannvorrichtung, in deren geöffnetem Zustand die Position der Lenksäule verstellbar und in deren geschlossenem Zustand die Position der Lenksäule festgestellt ist und die einen Spannbolzen umfasst, welcher eine Längsachse, erste und zweite, den Spannbolzen in axialer Richtung begrenzende Enden und eine den Spannbolzen in radialer Richtung begrenzende Außenwand besitzt, wobei der Spannbolzen zum Öffnen und Schließen der Spannvorrichtung mittels eines Betätigungshebels, den der Spannbolzen durch eine Öffnung durchsetzt, um seine Längsachse verdrehbar ist und wobei der Spannbolzen einen an sein erstes Ende anschließenden Endabschnitt und einen an den Endabschnitt in Richtung zum zweiten Ende des Spannbolzens anschließenden Verbindungsabschnitt aufweist, der im Bereich der Öffnung des Betätigungshebels liegt und in dessen axialer Erstreckung der Spannbolzen durch einen Presssitz mit dem Betätigungshebel verbunden wird.

Aus der WO 2011/100770 A1 geht eine Lenksäule der eingangs genannten Art hervor, welche einen um seine Längsachse verdrehbaren Spannbolzen aufweist, der mit einer die Längsachse des Spannbolzens umgebenden Verzahnung versehen ist. Ein Betätigungshebel ist mit einer aus Kunststoff bestehenden, die Längsachse des Spannbolzens umgebenden Fügefläche auf die Verzahnung des Spannbolzens axial aufgepresst, wobei die Zähne der Verzahnung in die Fügefläche zumindest teilweise eingegraben sind. Bei diesem axialen Aufpressen kommt es zu einer relativ hohen auf die Spannvorrichtung wirkenden axialen Kraft, wodurch es zu gewissen Verformungen in der Spannvorrichtung kommen kann, sodass gewünschte kleine Toleranzen nicht eingehalten werden oder noch nachträgliche Einstellungen erforderlich sind.

Aus der WO 2010/022855 A1 geht die Verbindung eines Betätigungshebels einer Spannvorrichtung mit einem vom Betätigungshebel beim Öffnen und Schließen gedrehten Spannstück hervor, wobei die Verbindung bei Überschreiten eines Grenzwertes des zwischen dem Betätigungshebel und dem Spannstück wirkenden Drehmoments eine Verdrehung zwischen dem Betätigungshebel und dem Spannstück ermöglicht. Es kann sich hierbei um eine formschlüssige und/oder kraftschlüssige Verbindung handeln.

Die US 4,990,021 A zeigt eine formschlüssige Anbindung eines Betätigungshebels an die Spannvorrichtung einer Lenksäule. Aus der EP 0 661 474 B1 geht eine formschlüssige Wellen- oder Schaft-Befestigung in einer Bohrung eines Aufnahmeteils hervor.

Die US 4,402,236 A zeigt eine Verbindung eines Betätigungshebels mit einem Spannbolzen einer Spannvorrichtung mittels einer Verschraubung und Presssitz.

Aufgabe der Erfindung ist es eine Lenksäule bzw. ein Verfahren der eingangs genannten Art bereitzustellen, wobei eine einfache Montage und geringe axiale Belastungen der Spannvorrichtung erreicht werden. Erfindungsgemäß gelingt dies durch eine Lenksäule mit den Merkmalen des Anspruchs 1 bzw. durch ein Verfahren mit den Merkmalen des Anspruchs 10.

Bei einer Lenksäule gemäß der Erfindung weist die Außenwand des Spannbolzens im Verbindungsabschnitt des Spannbolzens zumindest zwei in Umfangsrichtung des Spannbolzens (= in Drehrichtung um die Längsachse des Spannbolzens) beabstandete Pressbereiche auf, über deren Ausdehnung der Betätigungshebel an die Außenwand des Spannbolzens angepresst ist. In jedem Pressbereich weist die Außenwand des Spannbolzens bezogen auf einen durch den Pressbereich verlaufenden Längsmittelschnitt einen geringeren Abstand von der Längsachse des Spannbolzens auf, als zumindest über einen an den Verbindungsabschnitt anschließenden Teil des Endabschnitts des Spannbolzens.

Es wird dadurch eine formschlüssige Verbindung in axialer Richtung zum ersten Ende des Spannbolzens hin hergestellt.

Eine solche Pressverbindung kann in einfacher Weise durch eine radiale Verpressung mittels in Richtung zur Längsachse des Spannbolzens wirkender Pressbacken ausgebildet werden. Auf den Spannbolzen in axialer Richtung wirkende Kräfte können hierbei weitestgehend vermieden werden.

Vorzugsweise sind genau drei in Umfangsrichtung beabstandete Pressbereiche vorhanden.

Die Pressbereiche sind vorteilhafterweise gleichmäßig über den Umfang verteilt, d.h. der Winkelabstand zwischen in Umfangsrichtung aufeinanderfolgenden Pressbereichen ist gleich.

Der Spannbolzen ist vorzugsweise zumindest über den Endabschnitt und den Verbindungsabschnitt hohl ausgebildet. Er besitzt somit einen inneren axialen Hohlraum (=Kanal) d.h. der Spannbolzen ist zumindest über den Endabschnitt und den Verbindungsabschnitt als Hohlwelle ausgebildet. Vorteilhafterweise ist der Spannbolzen über den Verbindungsabschnitt hinaus, also auch über einen an den Verbindungsabschnitt in Richtung zum zweiten Ende des Spannbolzens anschließenden Abschnitt der Längserstreckung des Spannbolzens hohl ausgebildet. Beispielsweise ist der Spannbolzen über eine an den Verbindungsabschnitt in Richtung zum zweiten Ende anschließende Länge, die weniger als die Summe der Länge des Endabschnitts und des Verbindungsabschnitts beträgt, hohl ausgebildet oder ist der Spannbolzen insgesamt (= über seine gesamte Länge) hohl ausgebildet.

In einer vorteilhaften Ausführungsform bilden die Pressbereiche in Umfangsrichtung des Spannbolzens beabstandete Vertiefungen in der Außenwand. Der Betätigungshebel weist hierbei einen in den Pressbereichen an die Außenwand des Spannbolzens angepressten Kragen auf, wobei der Kragen zumindest abschnittsweise in den von den Pressbereichen gebildeten Vertiefungen der Außenwand liegt. Der Kragen ist hierbei über eine Umbiegung mit dem Basisteil des Betätigungshebels verbunden, wobei das Basisteil rechtwinkelig zur Längsachse des Spannbolzens steht.

Anstelle eines die Längsachse vollumfänglich (=ringförmig) umgebenden Kragens könnte der Betätigungshebel auch in Umfangsrichtung des Spannbolzens beabstandete Lappen aufweisen, welche jeweils in einem der Pressbereiche an die Außenwand des Spannbolzens angepresst sind, wobei sie zumindest abschnittsweise in der jeweiligen vom Pressbereich gebildeten Vertiefung der Außenwand liegen. Die Lappen sind dabei über eine Umbiegung mit einem Basisteil des Betätigungshebels verbunden, welches rechtwinkelig zur Längsachse des Spannbolzens steht.

Durch den Eingriff des Kragens oder der Lappen in die in Umfangsrichtung des Spannbolzens beabstandeten Vertiefungen wird auch ein Formschluss bezüglich einer Verdrehung des Betätigungshebels gegenüber dem Spannbolzen um die Längsachse des Spannbolzens ausgebildet.

Der Betätigungshebel ist günstigerweise aus Blech ausgebildet, wobei die Dicke des Blechs vorzugsweise, zumindest im Bereich des Verbindungsabschnitts mit dem Spannbolzen, weniger als 5mm beträgt.

Der Endabschnitt und der Verbindungsabschnitt des Spannbolzens stellen aneinander anschließende Teile der Längserstreckung des Spannbolzens dar.

Beim Verfahren zur Herstellung einer Lenksäule der eingangs genannten Art ist erfindungsgemäß vorgesehen, dass der Presssitz zwischen dem Betätigungshebel und dem Verbindungsabschnitt des Spannbolzens durch eine radiale Verpressung mittels in Richtung zur Längsachse des Spannbolzens wirkender Pressbacken ausgebildet wird. In einer vorteilhaften Ausführungsform der Erfindung ist hierbei vorgesehen, dass die Pressbacken auf mindestens zwei in Umfangsrichtung des Spannbolzens beabstandete, radial außerhalb der Außenwand des Spannbolzens liegende Bereiche des Betätigungshebels einwirken und diese Bereiche des Betätigungshebels gegen Pressbereiche der Außenwand des Spannbolzens verpressen, wobei die Bereiche des Betätigungshebels und die Pressbereiche der Außenwand des Spannbolzens plastisch verformt werden und hierbei Vertiefungen in der Außenwand des Spannbolzens ausgebildet werden, in welche die verpressten Bereiche des Betätigungshebels eingreifen. Günstigerweise ist bei dieser Verpressung ein Stift in einen Hohlraum des Spannbolzens eingefahren, welcher vom ersten Ende des Spannbolzens ausgeht und sich in Richtung der Längsachse des Spannbolzens erstreckt. Das freie Ende des Stifts liegt hierbei während des Verpressens im Bereich des Endabschnitts des Spannbolzens oder an der axialen Stelle, an welcher der Endabschnitt endet und der Verbindungsabschnitt beginnt.

Weitere Vorteile und Einzelheiten der Erfindung werden im Folgenden anhand der beiliegenden Zeichnung erläutert. In dieser zeigen:
Fig. 1 eine Schrägsicht eines Ausführungsbeispiels einer erfindungsgemäßen Lenksäule;
Fig. 2 einen Querschnitt durch die Lenksäule von Fig. 1 im Längsmittelschnitt durch den Spannbolzen;
Fig. 3 eine Schrägsicht des Spannbolzens mit dem mit ihm verbundenen Betätigungshebel und einer auf dem Spannbolzen aufzuschraubenden Mutter, die Verpressung zwischen dem Betätigungshebel und dem Spannbolzen nur angedeutet;
Fig. 4 eine vergrößerte Darstellung im Verbindungsbereich zwischen dem mit dem Spannbolzen verpressten Betätigungshebel (der Betätigungshebel etwas vereinfacht dargestellt);
Fig. 5a eine vergrößerte Darstellung im Verbindungsbereich mit dem Spannbolzen vor der Verbindung zwischen Betätigungshebel und Spannbolzen;
Fig. 5b eine Schnittdarstellung entlang der Linie AA von Fig. 5a vor dem Verpressen, zusammen mit einem schematisch dargestellten Presswerkzeug;
Fig. 6 eine Schnittdarstellung entsprechend Fig. 5b, die Pressbacken an den Ringbund des Betätigungshebels angelegt;
Fig. 7 eine Schnittdarstellung entsprechend Fig. 5b nach dem Verpressen;
Fig. 8 eine Schnittdarstellung entsprechend Fig. 5b, die Pressbacken wieder auseinandergefahren;
Fig. 9 eine Schnittdarstellung entsprechend Fig. 5b, das Presswerkzeug wieder abgezogen;
Fig. 10a eine Schnittdarstellung (Linie BB in Fig. 10b) eines Abschnitts des Spannbolzens und des Betätigungshebels gemäß einem zweiten Ausführungsbeispiel der Erfindung vor dem Verpressen zusammen mit schematisch dargestellten Pressbacken eines Presswerkzeuges, die Pressbacken bereits an den Spannbolzen angelegt;
Fig. 10b eine stirnseitige Ansicht (Blickrichtung C in Fig. 10a) des Spannbolzens zusammen mit den Pressbacken;
Fig. 11 a eine Schnittdarstellung (entlang der Linie DD in Fig. 11 b) nach dem Verpressen, die Pressbacken weggelassen;
Fig. 11b eine stirnseitige Ansicht entsprechend Fig. 10b nach dem Verpressen;
Fig. 12 eine Schrägsicht des mit dem Spannbolzen verbundenen Betätigungshebels im Verbindungsbereich;
Fig. 13 eine Darstellung analog Fig. 4 einer Modifikation des ersten Ausführungsbeispiels der Erfindung.

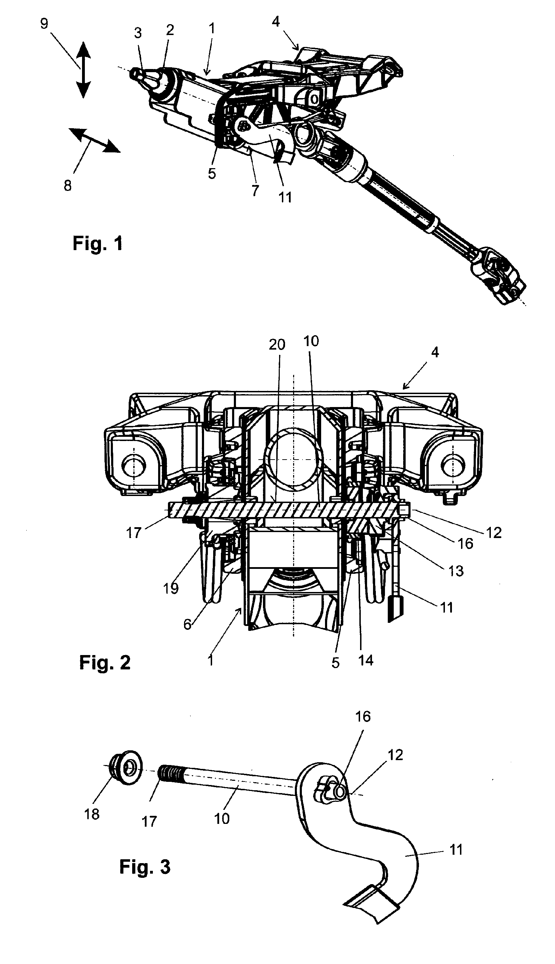

Ein erstes Ausführungsbeispiel der Erfindung ist in den Fig. 1 bis 9 dargestellt. Die Lenksäule umfasst eine von einer Manteleinheit 1 drehbar gelagerte Lenkspindel 2. An einem lenkradseitigen Ende 3 der Lenkspindel 2 ist ein nicht dargestelltes Lenkrad befestigbar. Die Manteleinheit 1 wird von einer karosseriefest montierbaren Trageinheit 4 getragen. Im Ausführungsbeispiel weist die Trageinheit beidseitig der Manteleinheit 1 liegende Seitenwangen 5, 6 auf. Im geschlossenen Zustand einer Spannvorrichtung 7 werden die Seitenwangen 5, 6 gegen die Manteleinheit 1 verspannt. Die Manteleinheit 1 ist damit gegenüber der Trageinheit 4 festgestellt. Im geöffneten Zustand der Spannvorrichtung 7 kann die Manteleinheit gegenüber der Trageinheit 4 in eine Verstellrichtung 8 einer Längenverstellung (in Richtung der Achse der Lenkspindel 2) und in eine Verstellrichtung 9 einer Höhen- bzw. Neigungsverstellung verstellt werden, um eine Einstellung der Position des lenkradseitigen Endes 3 der Lenkspindel 2 zu ermöglichen.

Die Spannvorrichtung 7 umfasst einen Spannbolzen 10, der Langlöcher in den Seitenwangen 5, 6 und in der Manteleinheit 1 durchsetzt. Die Langlöcher in den Seitenwangen 5, 6 verlaufen in Richtung der Verstellrichtung 9 und das Langloch in der Manteleinheit 1 verläuft in Richtung der Verstelleinrichtung 8.

Der Spannbolzen 10 ist drehfest mit einem Betätigungshebel 11 verbunden. Durch eine Verdrehung des Betätigungshebels 11 um die Längsachse 12 des Spannbolzens 10 wird die Spannvorrichtung 7 geöffnet und geschlossen. Hierzu wird ein auf dem Spannbolzen 10 angeordnetes Spannteil 13 gegenüber einem drehfest gehaltenen und sich an der Seitenwange 5 abstützenden Gegenspannteil 14 verdreht. Die Verdrehung des Spannteils 13 gegenüber dem Gegenspannteil 14 kann beispielsweise durch eine Mitnahmeverbindung zwischen dem Betätigungshebel 11 und dem Spannteil 13 erfolgen. Hierzu können nicht dargestellte Ausnehmungen im Betätigungshebel 11, in welche Vorsprünge des Spannteils 13 eingreifen vorgesehen sein. Eine solche Mitnahmeverbindung könnte auch in anderer Weise ausgebildet sein, beispielsweise auch direkt zwischen dem Spannbolzen 10 und dem Spannteil 13, z.B. durch eine von der Kreisform abweichende Kontur des Spannbolzens 10 im Bereich, in dem auf dem Spannbolzen 10 das Spannteil 13 mit einer korrespondierenden Kontur angeordnet ist.

Beispielsweise kann das Spannteil 13 als Nockenscheibe ausgebildet sein, deren Nocken an einer Oberfläche des als Nockenfolger ausgebildeten Gegenspannteils 14 anliegen. Eine andere Ausbildungsmöglichkeit wäre beispielsweise derart, dass das Spannteil 13 und/oder das Gegenspannteil 14 Schrägflächen aufweisen, auf denen Wälzkörper, z.B. Kugeln, abrollen, die zwischen dem Spannteil 13 und dem Gegenspannteil 14 angeordnet sind.

Die Verbindung des Betätigungshebels 11 mit dem Spannbolzen 10 erfolgt im Bereich eines ersten Endes 16 des Spannbolzens 10. An das zweite Ende 17 des Spannbolzens 10 schließt ein Außengewinde an, auf welches eine Mutter 18 aufgeschraubt ist, die sich, gegebenenfalls über eine Zwischenscheibe 19 an der Seitenwange 6 abstützt. Bei der Mutter 18 kann es sich beispielsweise um eine Mutter, insbesondere aus Kunststoff, mit einem beim Aufschrauben auf das Außengewinde des Spannbolzens 10 selbstschneidenden Gewinde handeln. Es kann auch eine Mutter 18, beispielsweise aus Stahl, mit einem bereits vorgeschnittenen Gewinde eingesetzt werden.

Das erste und das zweite Ende 16, 17 begrenzen den Spannbolzen in axialer Richtung seiner Längsachse 12. In radialer Richtung bezogen auf die Längsachse 12 wird der Spannbolzen 10 von seiner die Längsachse 12 umgebenden Außenwand 20 begrenzt.

Beim Schließen der Spannvorrichtung 7 werden das Gegenspannteil 14 und die Mutter 18 gegen die Seitenwangen 5, 6 und diese somit gegen die Manteleinheit 1 verspannt, wodurch die Manteleinheit 1 reibschlüssig mit der Trageinheit 4 verbunden ist.

Lenksäulen, welche die zuvor beschriebenen Merkmale aufweisen, sind in unterschiedlichen Ausbildungen bekannt. Die Erfindung ist bei unterschiedlichen solchen Lenksäulen einsetzbar.

Beispielsweise könnte die Spannvorrichtung 7 auch in modifizierter Weise ausgebildet sein. Neben reibschlüssig wirksamen Spannverbindungen könnten auch solche, bei denen im geschlossenen Zustand ein Formschluss und/oder ein kombinierter Reib- und Formschluss hergestellt ist, eingesetzt werden. Es sind unterschiedliche solche Spannverbindungen mit Spannbolzen bekannt, welche beim Öffnen und Schließen der Spannvorrichtung durch einen mit dem Spannbolzen drehfest verbundenen Betätigungshebel um ihre Längsachse verdreht werden. Zur Ausbildung von zusätzlichen Reibflächen könnten beispielsweise auch vom Spannbolzen durchsetzte Lamellen vorgesehen sein.

Zwischen der Manteleinheit 1 und der Trageinheit 4 könnte auch eine Schwenkeinheit vorgesehen sein, welche um eine horizontale, rechtwinkelig zur Achse der Lenkspindel 2 liegende Schwenkachse gegenüber der Trageinheit 4 verschwenkbar ist. Zur Höhen- oder Neigungsverstellung wird diese Schwenkeinheit im geöffneten Zustand der Spannvorrichtung 7 gegenüber der Trageinheit 4 verschwenkt. Zur Längenverstellung kann die Manteleinheit im geöffneten Zustand der Spannvorrichtung 7 in Richtung der Achse der Lenkspindel 2 gegenüber der Schwenkeinheit verstellt werden.

Die Trageinheit 4 könnte auch nur eine auf einer Seite der Manteleinheit 1 angeordnete Seitenwange 5 aufweisen.

Die Lenkspindel 2 weist für die Verstellung in die Verstellrichtung 8 vorteilhafterweise zwei gegeneinander teleskopierbare Abschnitte auf, wie dies bekannt ist.

Im Crashfall ist die Lenksäule vorteilhafterweise unter Energieabsorption zusammenschiebbar, wie dies ebenfalls bekannt ist.

Zur erfindungsgemäßen Befestigung des Betätigungshebels 11 in diesem Ausführungsbeispiel am Spannbolzen 10 weist der Betätigungshebel 11 einen Kragen 21 auf, der die Längsachse 12 des Spannbolzens 10 ringförmig umgibt. Der Kragen 21 ist über eine Umbiegung mit einem Basisteil 22 des Betätigungshebels 11 verbunden, welches rechtwinkelig zur Längsachse 12 steht. Insbesondere kann der Kragen 21 durch Kragenziehen aus dem aus Blech bestehenden, zuvor im Bereich des Kragens 21 ebenen (flachen) Hauptteil 22 ausgebildet werden.

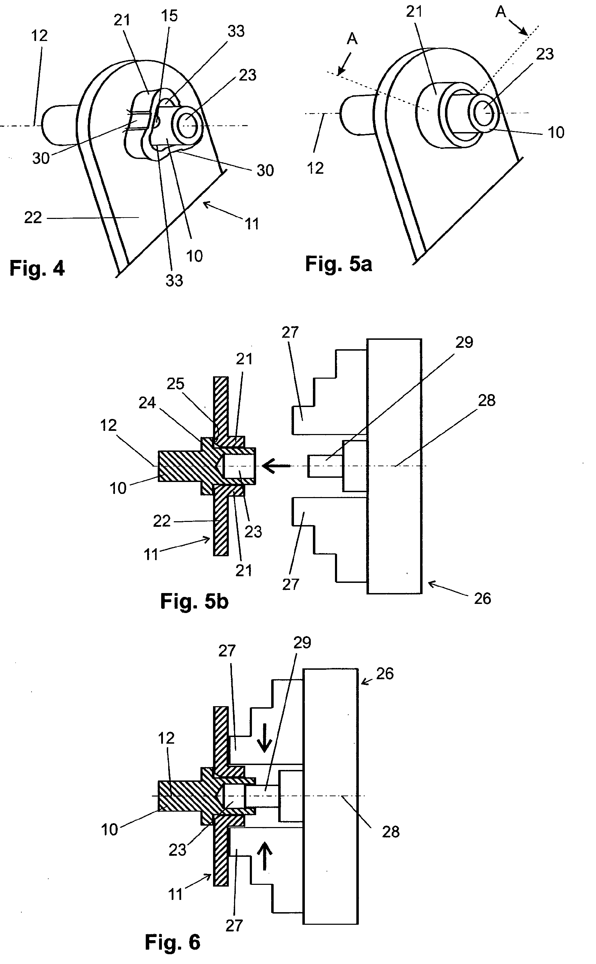

Vor dem Verpressen des Betätigungshebels 11 mit dem Spannbolzen 10 weist der Kragen 21 eine kreisringförmige Kontur auf, wie dies in Fig. 5a veranschaulicht ist. Die Wandstärke (=in radialer Richtung gemessene Materialstärke) des Kragens 21 liegt z.B. im Bereich von 1,5mm bis 4mm.

Zum Verpressen wird der Betätigungshebel 11 mit seiner Öffnung, die vom Kragen 21 umgeben ist, auf den Spannbolzen 10 aufgesteckt, vgl. Fig. 5b. Der Kragen 21 umgibt die Längsachse 12 konzentrisch und verläuft im Längsschnitt gesehen parallel zur Längsachse 12. Ausgehend vom Basisteil 22 erstreckt sich der Kragen 21 in Richtung zum ersten Ende 16 des Spannbolzens 10.

Der Spannbolzen 10 ist im vom Kragen 21 umgebenen Abschnitt hohl ausgebildet, besitzt also einen in axialer Richtung verlaufenden inneren Hohlraum 23. Die den Hohlraum 23 umgebende Wand liegt konzentrisch zur Längsachse 12. Vorzugsweise liegt die Dicke dieser Wand im Bereich von 1 mm bis 3mm.

Der Spannbolzen 10 besitzt vorteilhafterweise eine radial nach außen abstehende, beispielsweise den Spannbolzen ringförmig umgebende Erhöhung 24. Diese bildet eine Anlageschulter 25, an der der Betätigungshebel 11 an seiner vom ersten Ende 16 des Spannbolzens 10 abgewandten Seite anliegt.

Ein Presswerkzeug 26 zum Verpressen des Betätigungshebels 11 mit dem Spannbolzen 10 besitzt drei in Umfangsrichtung um eine Längsachse 28 des Presswerkzeugs gleichmäßig beabstandete Pressbacken 27 sowie einen in Richtung der Längsachse 28 sich erstreckenden und konzentrisch zu dieser angeordnet zylindrischen Stift 29.

Das Presswerkzeug 26 wird mit seinen Pressbacken 27 über den Kragen 21 des Betätigungshebels 11 aufgeschoben, vgl. Fig. 5b und 6. Hierbei wird der Stift 29, auch als Dorn bezeichnet, mit seinem freien Ende voraus in den Hohlraum 23 ausgehend vom ersten Ende 16 des Spannbolzens 10 eingeschoben. Die Längsachsen 12 und 28 liegen hierbei auf einer gemeinsamen Geraden. Der Stift 29 ragt vorzugsweise nur so weit in den Hohlraum 23, dass er bezogen auf die axiale Richtung der Längsachse 12 nicht mit der axialen Erstreckung des Kragens 21 überlappt. Das freie Ende des Stifts 29 liegt dann also im Bereich des Endabschnitts 32 oder beim Übergang zwischen dem Endabschnitt 32 und dem Verbindungsabschnitt 31.

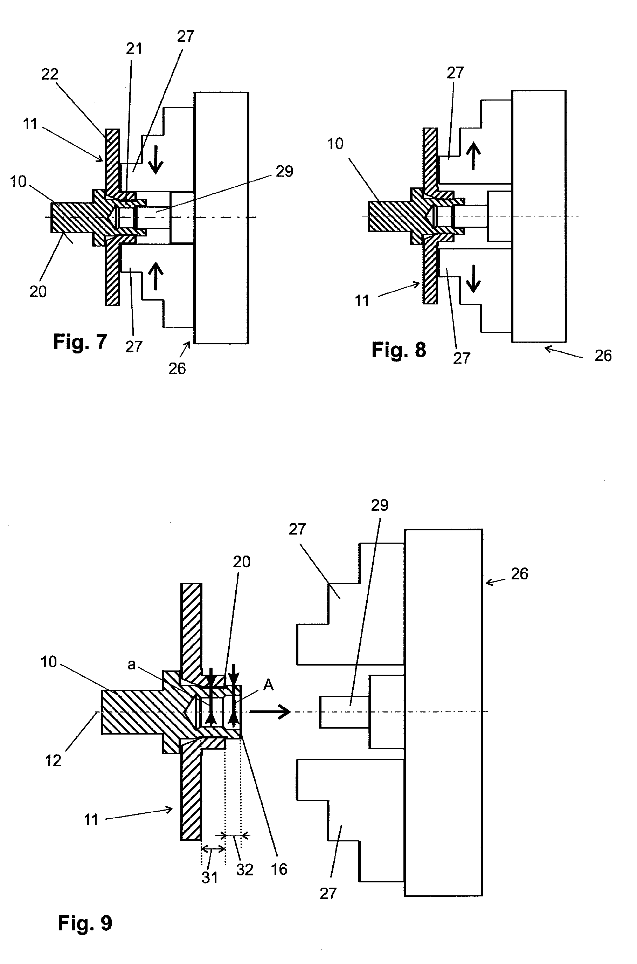

Die Pressbacken 27 werden nunmehr so weit zusammengefahren, dass sie am Kragen 21 anliegen, vgl. Fig. 6. In der Folge wird der Kragen 21 mit dem Spannbolzen 10 unter plastischer Verformung des Kragens 21, vorzugsweise auch des Spannbolzens 10, verpresst, indem die Pressbacken 27 weiter zusammengefahren werden, vgl. Fig. 7. Der Stift 29 verbleibt hierbei im Hohlraum 23.

In der Folge werden die Pressbacken 27 wieder auseinandergefahren, vgl. Fig. 8 und das Presswerkzeug wird in axialer Richtung abgezogen, vgl. Fig. 9.

Der ausgebildete Pressverband ist insbesondere aus den Fig. 4 und 9 ersichtlich. Nach dem Verpressen weist der Kragen 21 eine von der Kreisform abweichende Umfangskontur auf, zumindest im axialen Bereich der Verpressung mit dem Spannbolzen 10. An diesen verpressten Bereich kann in Richtung zum Basisteil 22 noch ein nicht verpresster axialer Bereich anschließen, der in den Figuren nicht dargestellt ist und eine auch nach dem Verpressen zumindest weitgehend kreisringförmige Form aufweisen kann, zumindest direkt anschließend an das Basisteil 22.

Dort wo die Pressbacken eingewirkt haben, weist die Außenwand des Kragens 21 Vertiefungen 30 auf. Auch am Spannbolzen 10 bildet sich bevorzugt eine Vertiefung 15 aus, so dass die Verbindung zusätzlich zu einem Kraftschluss auch bevorzugt durch einen zusätzlichen Formschluss in Verdrehrichtung bewirkt ist. Der Abschnitt der axialen Erstreckung des Spannbolzens 10, über welchen eine Verpressung mit dem Betätigungshebel 11 vorliegt, wird in der vorliegenden Schrift als Verbindungsabschnitt 31 des Spannbolzens 10 bezeichnet. Dieser Verbindungsabschnitt 31 liegt somit im Bereich der Öffnung durch den Betätigungshebel 11, d.h. radial außerhalb der Außenwand 20 des Spannbolzens 10 liegt eine die Öffnung des Betätigungshebels 11 umgebende Innenwand des Betätigungshebels 11. Im Ausführungsbeispiel gemäß den Fig. 1 bis 9 liegt der Verbindungsabschnitt 31 im Bereich der axialen Erstreckung des Kragens 21.

An den Verbindungsabschnitt 31 schließt zum ersten Ende 16 des Spannbolzens 10 ein bis zum ersten Ende 16 des Spannbolzens 10 sich axial erstreckender Endabschnitt 32 des Spannbolzens 10 an. Über diesen Endabschnitt 32 liegt keine Verpressung zwischen dem Betätigungshebel 11 und dem Spannbolzen 10 vor. Der Endabschnitt 32 und der Verbindungsabschnitt 31 stellen also aneinander anschließende Abschnitte der axialen Erstreckung (=Längserstreckung) des Spannbolzens 10 dar.

Mittels der drei in Umfangsrichtung um den Spannbolzen 10 (=in Drehrichtung um die Längsachse 12) beabstandeten Pressbacken 27 ist die Innenwand des Kragens 21 über die axialen und radialen Ausdehnungen von drei in Umfangsrichtung beabstandeten Pressbereichen der Außenwand 20 des Spannbolzens 10 an die Außenwand 20 des Spannbolzens 10 angepresst. Nur in diesen Pressbereichen der Außenwand 20 besteht ein radialer Pressverbund zwischen dem Spannbolzen 10 und dem Betätigungshebel 11, d.h. durch die elastische Vorspannung des Materials des Spannbolzens 10 und des Betätigungshebels 11 kommt es zu einer radialen Spannung zwischen diesen beiden Teilen.

Bezogen auf die Umfangsrichtung um den Spannbolzen 10 (=Drehrichtung um die Längsachse 12) liegen zwischen den Pressbereichen der Außenwand 20 Bereiche der Außenwand 20, welche nicht mit dem Betätigungshebel 11 verpresst sind, in welchen also keine radiale Spannung zwischen dem Betätigungshebel 11 und der Außenwand 20 vorliegt. Zwischen in Umfangsrichtung (=in Drehrichtung um die Längsachse 12) aufeinanderfolgenden Pressbereichen der Außenwand 20 liegt insbesondere jeweils ein Spalt 33 zwischen der Außenwand 20 und dem Kragen 21 des Betätigungshebels 11 vor, vgl. Fig. 4.

Bezogen auf die axiale Erstreckung des Spannbolzens 10 (=in Richtung der Längsachse 12) liegen beidseitig eines jeweiligen Pressbereiches Bereiche der Außenwand 20, die nicht mit dem Betätigungshebel 11 verpresst sind. Insbesondere kann der zum ersten Ende 16 des Spannbolzens 10 hin an die Pressbereiche axial anschließende Bereich nicht mehr vom Betätigungshebel 11 umgeben sein und in dem zum zweiten Ende 17 des Spannbolzens 10 an die Pressbereiche axial anschließenden Bereich ein Spalt zwischen der Außenwand 20 des Spannbolzens 10 und dem Betätigungshebel 11 vorliegen (vgl. Fig. 7 bis 9).

Im durch einen jeweiligen Pressbereich verlaufenden Längsmittelschnitt gesehen (also bezogen auf einen Schnitt durch einen jeweiligen Pressbereich, in dessen Schnittebene die Längsachse 12 liegt) weist die Außenwand des Spannbolzens 10 durch die Verpressung des Kragens 21 gegen die Außenwand 20 mittels der Pressbacken 27 von der Längsachse 12 einen Abstand a auf, der kleiner ist als der Abstand A der Außenwand 20 von der Längsachse 12 zumindest über einen an den Verbindungsabschnitt 31 in Richtung zum ersten Ende 16 anschließenden Teil des Endabschnitts 32 des Spannbolzens 10. Vorzugsweise ist der Abstand a über die gesamte axiale Erstreckung eines jeweiligen Pressbereichs kleiner als der Abstand A. Im gezeigten Ausführungsbeispiel ist der Abstand A über den gesamten Endabschnitt 32 des Spannbolzens 10 größer als der Abstand a.

Mit anderen Worten weist also, wenn man den Verbindungsabschnitt 31 und den Endabschnitt 32 oder zumindest einen an den Verbindungsabschnitt anschließenden Teil des Endabschnitts betrachtet, die Außenwand 20, bezogen auf einen durch den jeweiligen Pressbereich verlaufenden Längsmittelschnitt, in axialer Richtung des Spannbolzens 10 vom ersten Ende 16 des Spannbolzens 10 aus gesehen eine hinterschnittene Form auf. Die Hinterschneidung liegt hierbei im jeweiligen Pressbereich.

Durch die von den Pressbereichen gebildeten Hinterschneidungen wird eine formschlüssige Verbindung zwischen dem Betätigungshebel 11 und dem Spannbolzen 10 ausgebildet, welche gegen eine Verschiebung des Betätigungshebels 11 in Richtung zum ersten Ende 16 des Spannbolzens 10 wirkt.

Die Pressbereiche bilden in Umfangsrichtung um die Längsachse 12 beabstandete Vertiefungen in der Außenwand 20 des Spannbolzens 10, in welche radial nach innen ragende Erhebungen des Kragens 21 eingreifen. Es wird dadurch auch eine in Umfangsrichtung um die Längsachse 12 formschlüssige Verbindung zwischen dem Spannbolzen 10 und dem Betätigungshebel 11 ausgebildet.

Anstelle von drei in Umfangsrichtung beabstandeten Pressbereichen könnten auch zwei oder mehr als drei solche in Umfangsrichtung beabstandete Pressbereiche vorgesehen sein. Zur Ausbildung der Verpressung wird dann eine entsprechende Anzahl von zwei oder mehr als drei Pressbacken 27 eingesetzt.

Die Pressbereiche sind vorzugsweise gleichmäßig über den Umfang der Außenwand 20 verteilt, d.h. der Winkelabstand zwischen in Umfangsrichtung aufeinanderfolgenden Pressbereichen ist gleich.

Der Verbindungsabschnitt 31 und der Endabschnitt 32 erstrecken sich zusammen über weniger als 20%, vorzugsweise weniger als 10% der gesamten Länge des Spannbolzens 10. Zumindest über den Endabschnitt und den Verbindungsabschnitt ist der Spannbolzen 10 hohl ausgebildet. Vorzugsweise ist der Spannbolzen 10 über den Verbindungsabschnitt 31 hinaus in Richtung zum zweiten Ende hin hohl ausgebildet, beispielsweise über eine an den Verbindungsabschnitt 31 anschließende Länge, die weniger als 10% der gesamten Länge des Spannbolzens 10 und/oder weniger als die Länge des Endabschnitts 32 und Verbindungsabschnitts 31 zusammen beträgt. Auch eine insgesamt hohle Ausbildung des Spannbolzens 10 (=eine Ausbildung des gesamten Spannbolzens 10 als Hohlwelle) ist möglich.

Der Endabschnitt 32 des Spannbolzens 10 weist zumindest anschließend an den Verbindungsabschnitt 31 durch die Verpressung des Kragens 21 mit dem Verbindungsabschnitt 31 und der hierbei auftretenden plastischen Verformung dieser Teile eine von der Kreisform abweichende äußere Kontur auf. Zum ersten Ende 16 hin kann der Spannbolzen 10 eine zunehmend kreisringförmige Querschnittsform aufweisen.

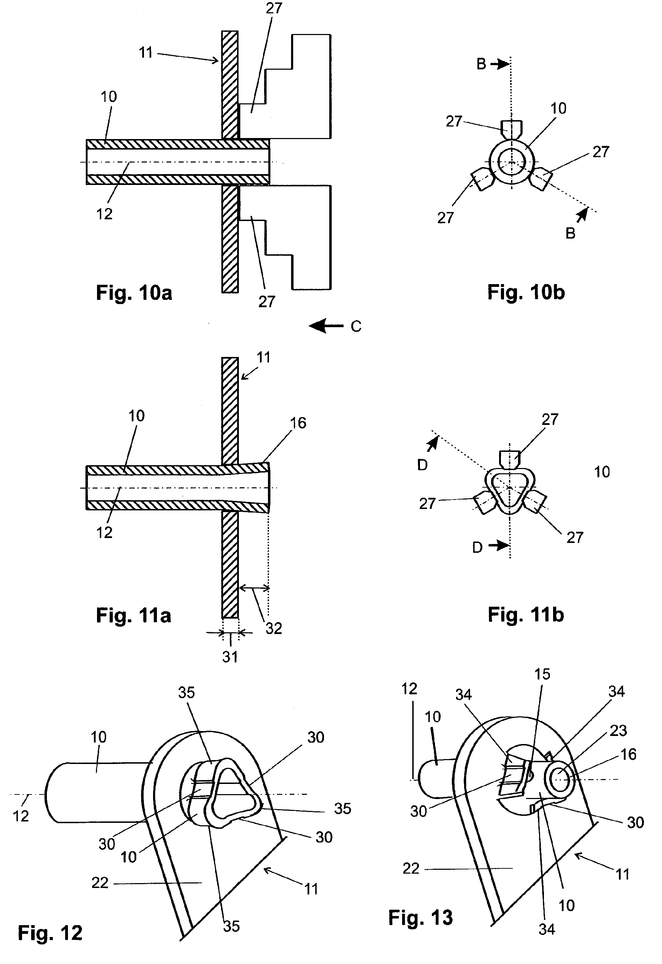

Ein zweites Ausführungsbeispiel der Erfindung ist in den Fig. 10 bis 12 dargestellt. Dieses Ausführungsbeispiel entspricht abgesehen von den im Folgenden beschriebenen Unterschieden dem zuvor beschriebenen Ausführungsbeispiel.

Ein Kragen des Betätigungshebels 11 kann hier entfallen. Die vom Spannbolzen 10 durchsetzte Öffnung des Betätigungshebels 11 wird damit von einer Schmalseite des Blechs gebildet, aus dem der Betätigungshebel 11 ausgebildet ist. Mit dieser die Öffnung begrenzenden Schmalseite des Blechs ist der Betätigungshebel 11 über die Ausdehnung der Pressbereiche der Außenwand 20 des Spannbolzens an die Außenwand 20 des Spannbolzens angepresst. Der Presssitz erfolgt also wiederum an in Umfangsrichtung beabstandeten Stellen. Zwischen den in Umfangsrichtung beabstandeten Pressbereichen des Spannbolzens 10, über welche dieser an die die Öffnung begrenzende Wand des Betätigungshebels 11 angepresst ist, liegen Spalte 33 zwischen dem Spannbolzen 10 und dem Betätigungshebel 11 vor.

Der Spannbolzen 10 ist in diesem Ausführungsbeispiel insgesamt als Hohlwelle ausgebildet. Er könnte aber auch einen Hohlraum aufweisen, der sich nur ausgehend vom ersten Ende 16 über den Endabschnitt 32, den Verbindungsabschnitt 31 und einen darüber hinausgehenden Abschnitt erstreckt, dessen Ausdehnung in axialer Richtung günstigerweise mindestens 5mm beträgt.

Die Ausbildung des Presssitzes erfolgt wiederum mittels eines Presswerkzeuges, von welchem hier nur die Pressbacken 27 dargestellt sind. Die Pressbacken 27 werden hier unmittelbar an den Endabschnitt 32 des Spannbolzens 10 angelegt und verpressen diesen radial nach innen an in Umfangsrichtung beabstandeten Pressstellen, vorzugsweise an drei in Umfangsrichtung beabstandeten Pressstellen. Durch diese Verpressung werden Bereiche, welche die Pressstellen aufweisen unter plastischer Verformung radial nach innen gedrückt. Dadurch werden bezogen auf die Umfangsrichtung des Spannbolzens 10 zwischen diesen radial nach innen gedrückten Bereichen liegende Zwischenbereiche einer plastischen Verformung unterworfen, bei der sie sich radial nach außen bewegen. Auf diese Weise sind Aufweitungsbereiche 35 am Spannbolzen ausgebildet. Die plastischen Verformungen in den Umfangsbereichen der Presstellen nach innen und in den Zwischenbereichen nach außen, das heisst die Aufweitungsbereiche, setzen sich über den Endabschnitt 32 hinaus, in welchem die Pressbacken 27 auf den Spannbolzen 10 einwirken, in Richtung zum zweiten Ende 17 fort (über einen gewissen Teil der Längserstreckung des Spannbolzens 10). Dadurch kommt es in den Bereichen der Umfangserstreckungen der Zwischenbereiche zu einem radialen Presssitz zwischen der Außenwand 20 des Spannbolzens und der die Öffnung des Betätigungshebels 11 umgebenden Innenwand des Betätigungshebels 11. Die Außenwand 20 des Spannbolzens 10 wird somit über in Umfangsrichtung beabstandete Pressbereiche mit dem Betätigungshebel 11 verpresst.

Bezogen auf durch diese Pressbereiche verlaufende Längsmittelschnitte des Spannbolzens 10 ist die Außenwand 20 des Spannbolzens 10 vom ersten Ende 16 des Spannbolzens 10 in axialer Richtung gesehen wiederum hinterschnitten ausgebildet, vgl. insbesondere Fig. 11 a.

Der Stift 29 des Presswerkzeugs entfällt in diesem zweiten Ausführungsbeispiel. Wiederum könnten auch nur zwei oder mehr als drei Pressbacken 27 eingesetzt werden.

Fig. 13 zeigt eine Modifikation des ersten Ausführungsbeispiels. Abgesehen von den im Folgenden beschriebenen Unterschieden liegt Übereinstimmung mit dem anhand der Fig. 1 bis 9 beschriebenen ersten Ausführungsbeispiel vor.

Anstelle eines umlaufenden Ringbundes weist der Betätigungshebel 11 in diesem modifizierten Ausführungsbeispiel umgebogene Lappen 34 auf, welche vom Hauptteil 22 abstehen. Beispielsweise können drei solche Lappen 34 vorhanden sein, welche im auf den Spannbolzen 10 aufgesteckten Zustand über die in Umfangsrichtung beabstandeten Pressbereiche an die Außenwand 20 des Spannbolzens 10 angepresst werden. Das Presswerkzeug mit den Backen 27 und dem Stift 29 und der Pressvorgang sind hierbei so wie anhand des ersten Ausführungsbeispiels beschrieben.

Die Lappen 34 können beispielsweise durch einen Stanz- und anschließenden Biegevorgang ausgebildet werden. Im auf den Spannbolzen 10 aufgesteckten Zustand erstrecken sie sich ausgehend vom Hauptteil 22 in axialer Richtung des Spannbolzens 10 in Richtung zum ersten Ende 16 des Spannbolzens 10.

Durch die Verpressung können wiederum in Umfangsrichtung beabstandete Vertiefungen in der Außenwand 20 ausgebildet werden, in welche durch die Verpressung gebildete Erhebungen der Lappen 34 eingreifen.

Es könne auch zwei oder mehr als zwei in Umfangsrichtung aufeinanderfolgende Lappen 34 vorhanden sein.

**Legende zu den Hinweisziffern:**

| | | | |
|---|---|---|---|
| 1 | Manteleinheit | 19 | Zwischenscheibe |
| 2 | Lenkspindel | 20 | Außenwand |
| 3 | lenkradseitiges Ende | 21 | Kragen |
| 4 | Trageinheit | 22 | Basisteil |
| 5 | Seitenwange | 23 | Hohlraum |
| 6 | Seitenwange | 24 | Erhöhung |
| 7 | Spannvorrichtung | 25 | Anlageschulter |
| 8 | Verstellrichtung | 26 | Presswerkzeug |
| 9 | Verstellrichtung | 27 | Pressbacke |
| 10 | Spannbolzen | 28 | Längsachse |
| 11 | Betätigungshebel | 29 | Stift |
| 12 | Längsachse | 30 | Vertiefung |
| 13 | Spannteil | 31 | Verbindungsabschnitt |
| 14 | Gegenspannteil | 32 | Endabschnitt |
| 15 | Vertiefung | 33 | Spalt |
| 16 | erstes Ende | 34 | Lappen |
| 17 | zweites Ende | 35 | Aufweitungsbereich |
| 18 | Mutter | | |

## Patentansprüche

1. Lenksäule für ein Kraftfahrzeug mit einer Spannvorrichtung (7), in deren geöffnetem Zustand die Position der Lenksäule verstellbar und in deren geschlossenem Zustand die Position der Lenksäule festgestellt ist und die einen Spannbolzen (10) umfasst, welcher eine Längsachse (12), erste und zweite, den Spannbolzen (10) in axialer Richtung begrenzende Enden (16, 17) und eine den Spannbolzen (10) in radialer Richtung begrenzende Außenwand (20) besitzt, wobei der Spannbolzen (10) zum Öffnen und Schließen der Spannvorrichtung (7) mittels eines Betätigungshebels (11), den der Spannbolzen (10) durch eine Öffnung durchsetzt, um seine Längsachse (12) verdrehbar ist und wobei der Spannbolzen (10) einen an sein erstes Ende (16) anschließenden Endabschnitt (32) und einen an den Endabschnitt (32) in Richtung zum zweiten Ende (17) des Spannbolzens (10) anschließenden Verbindungsabschnitt (31) aufweist, der im Bereich der Öffnung des Betätigungshebels (11) liegt und in dessen axialer Erstreckung der Spannbolzen (10) durch einen Presssitz mit dem Betätigungshebel (11) verbunden ist, **dadurch gekennzeichnet, dass** die Außenwand (20) des Spannbolzens (10) im Verbindungsabschnitt (31) des Spannbolzens (10) zumindest zwei in Umfangsrichtung um die Längsachse (12) beabstandete Pressbereiche aufweist, über welche der Betätigungshebel (11) an die Außenwand (20) angepresst ist und dass in jedem Pressbereich die Außenwand (20) des Spannbolzens (10) bezogen auf einen durch den Pressbereich verlaufenden Längsmittelschnitt einen geringeren Abstand (a) von der Längsachse (12) des Spannbolzens (10) aufweist als zumindest über einen an den Verbindungsabschnitt (31) anschließenden Teil des Endabschnitts (32) des Spannbolzens (10).

2. Lenksäule nach Anspruch 1, **dadurch gekennzeichnet, dass** der Verbindungsabschnitt (31) und der Endabschnitt (32) sich zusammen über weniger als 20% der gesamten Länge des Spannbolzens (10) erstrecken.

3. Lenksäule nach Anspruch 1 oder 2, **dadurch gekennzeichnet, dass** der Spannbolzen (10) zumindest über den Endabschnitt (32) und den Verbindungsabschnitt (31) hohl ausgebildet ist.

4. Lenksäule nach einem der Ansprüche 1 bis 3, **dadurch gekennzeichnet, dass** die Pressbereiche in Umfangsrichtung um die Längsachse (12) beabstandete Vertiefungen in der Außenwand (20) bilden.

5. Lenksäule nach einem der Ansprüche 1 bis 4, **dadurch gekennzeichnet, dass** der Betätigungshebel (11) einen in den Pressbereichen an die Außenwand (20) des Spannbolzens (10) angepressten Kragen (21) oder in den Pressbereichen an die Außenwand (20) des Spannbolzens (10) angepresste Lappen (34) aufweist.

6. Lenksäule nach Anspruch 5, **dadurch gekennzeichnet, dass** der Kragen (21) oder die Lappen (34) über eine Umbiegung oder eine jeweilige Umbiegung mit einem Basisteil des Betätigungshebels (11) verbunden ist oder sind, welcher rechtwinkelig zur Längsachse (12) des Spannbolzens (10) steht.

7. Lenksäule nach Anspruch 6, **dadurch gekennzeichnet, dass** sich der Kragen (21) oder die Lappen (34) ausgehend vom Basisteil (22) in Richtung zum ersten Ende (16) des Spannbolzens (10) erstreckt oder erstrecken.

8. Lenksäule nach einem der Ansprüche 1 bis 7, **dadurch gekennzeichnet, dass** der Spannbolzen (10) eine Erhöhung (24) aufweist, die eine Anlageschulter (25) bildet, an der der Betätigungshebel (11) an seiner vom ersten Ende (16) des Spannbolzens (10) abgewandten Seite anliegt.

9. Lenksäule nach einem der Ansprüche 1 bis 4, **dadurch gekennzeichnet, dass** der aus Blech bestehende Betätigungshebel (11) mit einer die Öffnung des Betätigungshebels (11) begrenzenden Innenwand, die von einer Schmalseite des Blechs gebildet wird, über die Pressbereiche der Außenwand (20) des Spannbolzens (10) an die Außenwand (20) des Spannbolzens (10) angepresst ist.

10. Verfahren zur Herstellung einer Lenksäule für ein Kraftfahrzeug mit einer Spannvorrichtung (7), in deren geöffnetem Zustand die Position der Lenksäule verstellbar und in deren geschlossenem Zustand die Position der Lenksäule festgestellt ist und die einen Spannbolzen (10) umfasst, welcher eine Längsachse (12), erste und zweite, den Spannbolzen (10) in axialer Richtung begrenzende Enden (16, 17) und eine den Spannbolzen (10) in radialer Richtung begrenzende Außenwand (20) besitzt, wobei der Spannbolzen (10) zum Öffnen und Schließen der Spannvorrichtung (7) mittels eines Betätigungshebels (11), den der Spannbolzen (10) durch eine Öffnung durchsetzt, um seine Längsachse (12) verdrehbar ist und wobei der Spannbolzen (10) einen an sein erstes Ende (16) anschließenden Endabschnitt (32) und einen den Endabschnitt (32) in Richtung zum zweiten Ende (17) des Spannbolzens (10) anschließenden Verbindungsabschnitt aufweist, der im Bereich der Öffnung des Betätigungshebels (11) liegt und über dessen axiale Erstreckung der Spannbolzen (10) durch einen Presssitz mit dem Betätigungshebel (11) verbunden wird, **dadurch gekennzeichnet, dass** der Presssitz zwischen dem Betätigungshebel (11) und dem Verbindungsabschnitt (31) des Spannbolzens (10) durch eine radiale Verpressung mittels in Richtung zur Längsachse (12) des Spannbolzens (10) wirkender Pressbacken (27) ausgebildet wird.

11. Verfahren nach Anspruch 10, **dadurch gekennzeichnet, dass** die Pressbacken (27) auf mindestens zwei in Umfangsrichtung des Spannbolzens (10) beabstandete, radial außerhalb der Außenwand (20) des Spannbolzens (10) liegende Bereiche des Betätigungshebels (11) einwirken und diese Bereiche des Betätigungshebels (11) gegen Pressbereiche der Außenwand (20) des Spannbolzens (10) verpressen, wobei die Bereiche des Betätigungshebels (11) und die Pressbereiche der Außenwand (20) des Spannbolzens (10) plastisch verformt werden und hierbei Vertiefungen in der Außenwand (20) des Spannbolzens (10) ausgebildet werden, in welche die verpressten Bereiche des Betätigungshebels (11) eingreifen.

12. Verfahren nach Anspruch 10 oder 11, **dadurch gekennzeichnet, dass** der Spannbolzen (10) anschließend an sein erstes Ende (16) einen axial verlaufenden Hohlraum (23) aufweist, der sich zumindest über den Endabschnitt (32) und den Verbindungsabschnitt (31) erstreckt.

13. Verfahren nach Anspruch 12, **dadurch gekennzeichnet, dass** vor der Verpressung mittels der Pressbacken (27) ein Stift (29) mit einem freien Ende voraus in den Hohlraum (23) eingefahren wird und während des Verpressens im Hohlraum (23) verbleibt.

14. Verfahren nach Anspruch 13, **dadurch gekennzeichnet, dass** das freie Ende des Stifts (29) während des Verpressens im Bereich des Endabschnitts (32) oder beim Übergang zwischen den Endabschnitt (32) und dem Verbindungsabschnitt (31) liegt.

15. Verfahren nach Anspruch 10, **dadurch gekennzeichnet, dass** die Pressbacken (27) direkt auf mindestens zwei in Umfangsrichtung des Spannbozens (10) beabstandete Pressstellen des Spannbolzens (10) einwirken, wobei in Umfangsrichtung zwischen den Pressstellen liegende Zwischenbereiche der Außenwand (20) des zumindest über den Endabschnitt (32) und den Verbindungsabschnitt (31) hohl ausgebildeten Spannbolzen (10) radial nach außen plastisch verformt werden.

## Claims

1. Steering column for a motor vehicle, having a clamping device (7), in the open state of which the position of the steering column is adjustable and in the closed state of which the position of the steering column is fixed and which comprises a clamping bolt (10), which clamping bolt has a longitudinal axis (12), first and second ends (16, 17) which delimit the clamping bolt (10) in an axial direction, and an outer wall (20) which delimits the clamping bolt (10) in a radial direction, wherein the clamping bolt (10) is rotatable about its longitudinal axis (12) for the opening and closing of the clamping device (7) by means of an actuation lever (11), through an opening of which the clamping bolt (10) extends, and wherein the clamping bolt (10) has an end section (32) adjoining its first end (16) and has a connecting section (31) which adjoins the end section (32) in the direction of the second end (17) of the clamping bolt (10) and which is situated in the region of the opening of the actuation lever (11) and in the axial extent of which the clamping bolt (10) is connected to the actuation lever (11) by way of a press fit, **characterized in that** the outer wall (20) of the clamping bolt (10) has, in the connecting section (31) of the clamping bolt (10), at least two pressing regions which are spaced apart in the circumferential direction about the longitudinal axis (12) and by way of which the actuation lever (11) is pressed against the outer wall (20), and **in that**, as viewed in a longitudinal central section running through the pressing region, the outer wall (20) of the clamping bolt (10) has a smaller spacing (a) from the longitudinal axis (12) of the clamping bolt (10) in each pressing region than at least over a part of that end section (32) of the clamping bolt (10) which adjoins the connecting section (31).

2. Steering column according to Claim 1, **characterized in that** the connecting section (31) and the end section (32) extend together over less than 20% of the total length of the clamping bolt (10).

3. Steering column according to Claim 1 or 2, **characterized in that** the clamping bolt (10) is of hollow form at least over the end section (32) and the connecting section (31).

4. Steering column according to one of Claims 1 to 3, **characterized in that** the pressing regions form depressions, which are spaced apart in the circumferential direction about the longitudinal axis (12), in the outer wall (20).

5. Steering column according to one of Claims 1 to 4, **characterized in that** the actuation lever (11) has a collar (21) which is pressed against the outer wall (20) of the clamping bolt (10) in the pressing regions, or said actuation lever has lugs (34) which are pressed against the outer wall (20) of the clamping bolt (10) in the pressing regions.

6. Steering column according to Claim 5, **characterized in that** the collar (21) or the lugs (34) is or are connected by way of a bend or a respective bend to a base part of the actuation lever (11), which base part is at right angles to the longitudinal axis (12) of the clamping bolt (10).

7. Steering column according to Claim 6, **characterized in that** the collar (21) or the lugs (34) extend(s) from the base part (22) in the direction of the first end (16) of the clamping bolt (10).

8. Steering column according to one of Claims 1 to 7, **characterized in that** the clamping bolt (10) has an elevation (24) which forms an abutment shoulder (25) against which the actuation lever (11), at its side averted from the first end (16) of the clamping bolt (10), bears.

9. Steering column according to one of Claims 1 to 4, **characterized in that** the actuation lever (11), which is composed of sheet metal, is pressed, by way of an inner wall which delimits the opening of the actuation lever (11) and which is formed by a narrow side of the sheet metal, against the outer wall (20) of the clamping bolt (10) over the pressing regions of the outer wall (20) of the clamping bolt (10).

10. Method for producing a steering column for a motor vehicle having a clamping device (7), in the open state of which the position of the steering column is adjustable and in the closed state of which the position of the steering column is fixed and which comprises a clamping bolt (10), which clamping bolt has a longitudinal axis (12), first and second ends (16, 17) which delimit the clamping bolt (10) in an axial direction, and an outer wall (20) which delimits the clamping bolt (10) in a radial direction, wherein the clamping bolt (10) is rotatable about its longitudinal axis (12) for the opening and closing of the clamping device (7) by means of an actuation lever (11), through an opening of which the clamping bolt (10) extends, and wherein the clamping bolt (10) has an end section (32) adjoining its first end (16) and has a connecting section which adjoins the end section (32) in the direction of the second end (17) of the clamping bolt (10) and which is situated in the region of the opening of the actuation lever (11) and in the axial extent of which the clamping bolt (10) is connected to the actuation lever (11) by way of a press fit, **characterized in that** the press fit between the actuation lever (11) and the connecting section (31) of the clamping bolt (10) is formed by way of a radial pressing action by means of press jaws (27) which act in the direction of the longitudinal axis (12) of the clamping bolt (10).

11. Method according to Claim 10, **characterized in that** the press jaws (27) act on at least two regions of the actuation lever (11) which are spaced apart in the circumferential direction of the clamping bolt (10) and which are situated radially outside the outer wall (20) of the clamping bolt (10), and said press jaws press said regions of the actuation lever (11) against pressing regions of the outer wall (20) of the clamping bolt (10), wherein the regions of the actuation lever (11) and the pressing regions of the outer wall (20) of the clamping bolt (10) are plastically deformed and, in the process, depressions are formed in the outer wall (20) of the clamping bolt (10), into which depressions the pressed regions of the actuation lever (11) engage.

12. Method according to Claim 10 or 11, **characterized in that** the clamping bolt (10) has, adjoining its first end (16), an axially running cavity (23) which extends at least over the end section (32) and the connecting section (31).

13. Method according to Claim 12, **characterized in that**, before the pressing process by means of the press jaws (27), a pin (29) is inserted, with a free end first, into the cavity (23), said pin remaining in the cavity (23) during the pressing process.

14. Method according to Claim 13, **characterized in that** the free end of the pin (29) is, during the pressing process, situated in the region of the end section (32) or at the transition between the end section (32) and the connecting section (31).

15. Method according to Claim 10, **characterized in that** the press jaws (27) act directly on at least two pressing points of the clamping bolt (10) which are spaced apart in the circumferential direction of the clamping bolt (10), wherein intermediate regions, situated between the pressing points in the circumferential direction, of the outer wall (20) of the clamping bolt (10) which is of hollow form at least over the end section (32) and the connecting section (31) are plastically deformed in a radially outward direction.

## Revendications

1. Colonne de direction pour un véhicule automobile, comprenant un dispositif de serrage (7) dans l'état ouvert duquel la position de la colonne de direction peut être réglée et dans l'état fermé duquel la position de la colonne de direction est fixe et qui comporte un boulon de serrage (10), lequel possède un axe longitudinal (12), des première et deuxième extrémités (16, 17) qui délimitent le boulon de serrage (10) dans le sens axial et une paroi externe (20) qui délimite le boulon de serrage (10) dans le sens radial, le boulon de serrage (10), en vue d'ouvrir et de fermer le dispositif de serrage (7), pouvant être amené à effectuer une rotation autour de son axe longitudinal (12) au moyen d'un levier d'actionnement (11) qui entrecoupe le boulon de serrage (10) à travers une ouverture et le boulon de serrage (10) possédant une portion d'extrémité (32) rattachée à sa première extrémité (16) et, rattachée à la portion d'extrémité (32) en direction de la deuxième extrémité (17) du boulon de serrage (10), une portion de liaison (31) qui se trouve dans la zone de l'ouverture du levier d'actionnement (11) et dans le prolongement axial de laquelle le boulon de serrage (10) est relié au levier d'actionnement (11) par le biais d'un ajustage serré, **caractérisée en ce que** la paroi externe (20) du boulon de serrage (10), dans la portion de liaison (31) du boulon de serrage (10), possède au moins deux zones de pressage espacées autour de l'axe longitudinal (12) dans le sens circonférentiel, par le biais desquelles le levier d'actionnement (11) est pressé contre la paroi externe (20), et en ce dans chaque zone de pressage, la paroi externe (20) du boulon de serrage (10), en référence à une coupe centrale longitudinale qui s'étend à travers la zone de pressage, possède un écart (a) plus faible par rapport à l'axe longitudinal (12) du boulon de serrage (10) qu'au moins sur une partie de la portion d'extrémité (32) du boulon de serrage (10) qui est rattachée à la portion de liaison (31).

2. Colonne de direction selon la revendication 1, **caractérisée en ce que** la portion de liaison (31) et la portion d'extrémité (32) s'étendent ensemble sur moins de 20 % de la longueur totale du boulon de serrage (10).

3. Colonne de direction selon la revendication 1 ou 2, **caractérisée en ce que** le boulon de serrage (10) est de configuration creuse au moins sur la portion d'extrémité (32) et la portion de liaison (31).

4. Colonne de direction selon l'une des revendications 1 à 3, **caractérisée en ce que** les zones de pressage forment des cavités dans la paroi externe (20) espacées autour de l'axe longitudinal (12) dans le sens circonférentiel.

5. Colonne de direction selon l'une des revendications 1 à 4, **caractérisée en ce que** le levier d'actionnement (11) possède une collerette (21) appliquée par pressage dans les zones de pressage sur la paroi externe (20) du boulon de serrage (10) ou des pattes (34) appliquées par pressage dans les zones de pressage sur la paroi externe (20) du boulon de serrage (10).

6. Colonne de direction selon la revendication 5, **caractérisée en ce que** la collerette (21) ou les pattes (34) est ou sont reliée(s) par le biais d'un cintrage ou d'un cintrage respectif à une partie de base du levier d'actionnement (11), laquelle est perpendiculaire à l'axe longitudinal (12) du boulon de serrage (10).

7. Colonne de direction selon la revendication 6, **caractérisée en ce que** la collerette (21) ou les pattes (34) s'étend ou s'étendent depuis la partie de base (22) en direction de la première extrémité (16) du boulon de serrage (10).

8. Colonne de direction selon l'une des revendications 1 à 7, **caractérisée en ce que** le boulon de serrage (10) possède un rehaussement (24) qui forme un épaulement d'appui (25) contre lequel repose le levier d'actionnement (11) par son côté à l'opposé de la première extrémité (16) du boulon de serrage (10).

9. Colonne de direction selon l'une des revendications 1 à 4, **caractérisée en ce que** le levier d'actionnement (11), constitué de tôle, est pressé contre la paroi externe (20) du boulon de serrage (10) par le biais des zones de pressage de la paroi externe (20) du boulon de serrage (10) avec une paroi interne, laquelle est formée par un côté étroit de la tôle, qui délimite l'ouverture du levier d'actionnement (11).

10. Procédé de fabrication d'une colonne de direction pour un véhicule automobile, comprenant un dispositif de serrage (7) dans l'état ouvert duquel la position de la colonne de direction peut être réglée et dans l'état fermé duquel la position de la colonne de direction est fixe et qui comporte un boulon de serrage (10), lequel possède un axe longitudinal (12), des première et deuxième extrémités (16, 17) qui délimitent le boulon de serrage (10) dans le sens axial et une paroi externe (20) qui délimite le boulon de serrage (10) dans le sens radial, le boulon de serrage (10), en vue d'ouvrir ou de fermer le dispositif de serrage (7), pouvant être amené à effectuer une rotation autour de son axe longitudinal (12) au moyen d'un levier d'actionnement (11) qui entrecoupe le boulon de serrage (10) à travers une ouverture et le boulon de serrage (10) possédant une portion d'extrémité (32) rattachée à sa première extrémité (16) et, rattachée à la portion d'extrémité (32) en direction de la deuxième extrémité (17) du boulon de serrage (10), une portion de liaison qui se trouve dans la zone de l'ouverture du levier d'actionnement (11) et dans le prolongement axial de laquelle le boulon de serrage (10) est relié au levier d'actionnement (11) par le biais d'un ajustage serré, **caractérisé en ce que** l'ajustage serré entre le levier d'actionnement (11) et la portion de liaison (31) du boulon de serrage (10) est formé par un pressage radial au moyen de mâchoires de pressage (27) qui agissent dans la direction de l'axe longitudinal (12) du boulon de serrage (10).

11. Procédé selon la revendication 10, **caractérisé en ce que** les mâchoires de pressage (27) agissent sur au moins deux zones du levier d'actionnement (11) qui sont espacée dans le sens circonférentiel du boulon de serrage (10) et qui se trouvent, dans le sens radial, en-dehors de la paroi externe (20) du boulon de serrage (10), et pressent ces zones du levier d'actionnement (11) contre les zones de pressage de la paroi externe (20) du boulon de serrage (10), les zones du levier d'actionnement (11) et les zones de pressage de la paroi externe (20) du boulon de serrage (10) subissant une déformation plastique et des cavités étant ainsi formées dans la paroi externe (20) du boulon de serrage (10), dans lesquelles viennent en prise les zones pressées du levier d'actionnement (11).

12. Procédé selon la revendication 10 ou 11, **caractérisé en ce que** le boulon de serrage (10) possède un espace creux (23) qui s'étend dans le sens axial et qui est rattaché à sa première extrémité (16), lequel s'étend au moins sur la portion d'extrémité (32) et la portion de liaison (31).

13. Procédé selon la revendication 12, **caractérisé en ce qu'**avant le pressage au moyen des mâchoires de pressage (27), une goupille (29) munie d'une extrémité libre est enfoncée à l'avance dans l'espace creux (23) et demeure dans l'espace creux (23) pendant le pressage.

14. Procédé selon la revendication 13, **caractérisé en ce que** pendant le pressage, l'extrémité libre de la goupille (29) se trouve dans la zone de la portion d'extrémité (32) ou au niveau de la transition entre la portion d'extrémité (32) et la portion de liaison (31).

15. Procédé selon la revendication 10, **caractérisé en ce que** les mâchoires de serrage (27) agissent directement sur au moins deux points de pressage du boulon de serrage (10) espacés dans le sens circonférentiel du boulon de serrage (10), des zones intermédiaires de la paroi externe (20), du boulon de serrage (10), de configuration creuse au moins sur la portion d'extrémité (32) et la portion de liaison (31), se trouvant dans le sens circonférentiel entre les points de pressage, subissant une déformation plastique dans le sens radial vers l'extérieur.
